# FASCICULE DE BREVET EUROPEEN

(11) **EP 1 649 314 B1**
(45) Date de publication et mention de la délivrance du brevet: **05.03.2008**
(21) Numéro de dépôt: 04767572.3
(22) Date de dépôt: 02.07.2004
(51) Int. Cl.: G02B 21/00

(54) **DISPOSITIF D'IMAGERIE A BALAYAGE POUR MICROSCOPIE CONFOCALE A SOUSTRACTION D'IMAGES**
RASTERABBILDUNGSEINRICHTUNG FÜR DIE KONFOKALE MIKROSKOPIE MIT BILDSUBSTRAKTION
SCANNING IMAGING DEVICE FOR CONFOCAL MICROSCOPY WITH IMAGE SUBSTRACTION

(30) Priorité: 04.07.2003 FR 0308243; 29.07.2003 FR 0309361
(43) Date de publication de la demande: 26.04.2006
(73) Titulaire: Lauer, Vincent, 94130 Nogent sur Marne (FR)
(72) Inventeur: Lauer, Vincent, 94130 Nogent sur Marne (FR)
(86) Numéro de dépôt international: PCT/FR2004/001733
(87) Numéro de publication internationale: WO 2005/006050

(56) Documents cités:
- US-B1- 6 545 265
- WILSON T ET AL: "Difference confocal scanning microscopy" OPTICA ACTA, XX, XX, vol. 31, no. 4, avril 1984 (1984-04), pages 453-465, XP002115491 ISSN: 0030-3909

## Description

Domaine technique : il s'agit d'un système d'imagerie à balayage applicable par exemple en microscopie et proche du microscope confocal.

### Technique antérieure :

Le brevet US 6,144,489 décrit l'extraction de la partie confocale d'une image semi-confocale, obtenue en soustrayant une image non confocale à l'image confocale.

Le brevet US 6,426,835 décrit un cas particulier du premier brevet, précisant les détails du calcul à effectuer. Le brevet US 6,545,265 décrit l'amélioration d'images confocales par soustraction de deux images confocales obtenues à partir de réseaux de trous microscopiques de caractéristiques différentes. Dans ce brevet les deux images peuvent être obtenues à partir de lumière sélectionnée provenant de disques ou d'anneaux dans un plan observé, toutefois les images restent confocales au sens ou la zone éclairée coïncide toujours avec la zone d'où provient la lumière sélectionnée.

Le brevet US 6,687,052 décrit une technique de soustraction de deux images dont l'une est semi-confocale et l'autre est obtenue à partir de la lumière non utilisée pour générer l'image semi-confocale. Dans ce brevet un masque est utilisé pour filtrer la lumière provenant de l'objet observé. Ce masque comprend des parties transparentes et des parties réfléchissantes. La lumière transmise par le masque est utilisée pour générer une première image. La lumière réfléchie en sens opposé par le masque est utilisée pour générer une seconde image.

### Description de l'invention.

L'invention a pour objectif d'améliorer la qualité et la luminosité des images confocales ou semi-confocales, et en particulier des images obtenues en fluorescence.

A cet effet l'invention consiste en un dispositif d'imagerie selon la revendication 1.

De préférence, lesdites bandes sont des anneaux concentriques auxdits points d'éclairage. Toutefois les bandes peuvent avoir tout type de formes, par exemple carrées ou hexagonales sans que le principe de l'invention soit remis en cause.

Le dispositif diffère de l'art antérieur (US 6,545,265) par le fait que la deuxième image est formée à partir de la lumière provenant d'un anneau (ou d'une bande) entourant le point d'éclairage. Dans le brevet US 6,545,265 :
- soit l'éclairage est focalisé sur un point et la lumière provenant du point d'éclairage est sélectionnée pour former l'image, la première et la deuxième image différant entre elles par la taille du point d'éclairage,
- soit la lumière provenant d'un anneau est sélectionnée pour former la deuxième image, mais dans ce cas l'éclairage est également modifié entre la première et la deuxième image, de sorte lors de l'acquisition de la deuxième image un anneau est éclairé, cet anneau coïncidant avec celui dont provient la lumière sélectionnée pour former la deuxième image.

Selon l'invention, l'image est donc obtenue en supprimant la lumière provenant de la zone d'éclairage (car elle est bloquée par le centre de l'anneau) au lieu de la sélectionner. De ce fait, lorsque un objet est dans le plan observé, la première image est de luminosité élevée et la deuxième image est de luminosité nulle. Donc, la différence entre les deux images est égale à la première image, de luminosité élevée. Lorsque un objet est éloigné du plan observé, et pour une dimension appropriée de l'anneau, les deux images sont de luminosité comparable et la différence entre les deux images est donc de luminosité nulle. On constate donc que la différence entre les deux images permet de ne conserver que l'image du plan observé et d'éliminer tout ce qui vient des plans éloignés.

Plutôt que de sélectionner la lumière provenant d'un anneau on aurait pu pour la deuxième image conserver la totalité de la zone non éclairée, comme cela est fait dans US 6,687,052. Toutefois dans ce cas, et du fait que seul un ensemble réduit de points est éclairé, la luminosité de la deuxième image serait beaucoup plus élevée que la luminosité de la première image, ce qui perturbe les capteurs. L'utilisation d'un anneau permet également d'optimiser la résolution verticale et horizontale de l'image et de mieux rejeter la lumière ne provenant pas du plan observé.

Si on avait sélectionné pour la deuxième image la lumière provenant d'un anneau, mais en utilisant pour cette deuxième image un éclairage également annulaire et éclairant l'anneau dont provient la lumière sélectionnée, comme dans le cas de US 6,545,265, les caractéristiques de l'image résultante (troisième image) n'auraient pas été notablement améliorées.

Selon l'invention, lesdits moyens pour combiner lesdites première et seconde images déterminent la différence entre la première image affectée d'un premier coefficient multiplicateur, et la seconde image affectée d'un second coefficient multiplicateur. Les coefficients multiplicateurs permettent de s'adapter aux conditions exactes d'imagerie. L'image résultante peut éventuellement être ajustée ensuite en niveau et contraste, de manière en particulier à supprimer les éventuelles valeurs négatives avant affichage.

Le dispositif peut comprendre une pluralité de points d'éclairage et une pluralité de bandes, chacune desdites bandes entourant un point d'éclairage correspondant. Ce cas est celui d'un système multipoints. Dans ce cas, l'avantage le plus immédiat du système par rapport à un confocal multipoints simple est un très bon rejet de la lumière provenant de points qui ne sont pas dans le plan observé.

Dans ce cas, le moyen pour éclairer l'ensemble de points d'éclairage comprend de préférence un réseau de microlentilles séparant un faisceau laser en une pluralité de sous-faisceaux focalisés chacun sur un point d'éclairage. Par rapport à des méthodes en lumière cohérente, ceci permet d'obtenir un éclairage plus intense.

Le dispositif peut également ne comporter qu'un seul point d'éclairage obtenu par exemple par une lentille focalisant un faisceau laser sur le point d'éclairage. Dans ce cas, l'avantage le plus immédiat par rapport à un microscope confocal monopoint est l'amélioration de la résolution verticale et horizontale.

La première et la seconde image peuvent être formées successivement ou simultanément.

Selon une version de l'invention adaptée au cas ou la première et la seconde image sont formées successivement, les moyens pour sélectionner la lumière sont constitués par la superposition d'une première plaque opaque comprenant au moins un disque transparent, et d'une seconde plaque opaque comprenant au moins un disque transparent et au moins un anneau transparent, ainsi que par un moyen pour translater la seconde plaque par rapport à la première, pour amener le disque de la seconde plaque en regard du disque de la première plaque lors de l'acquisition de la première image, et pour amener ensuite l'anneau de la seconde plaque en regard du disque de la première plaque lors de l'acquisition de la seconde image. La superposition des deux plaques équivaut donc à un disque transparent lors de l'acquisition de la première image, et à un anneau transparent lors de l'acquisition de la seconde image. Lors de l'acquisition de la première image le disque doit coïncider avec l'image du point d'éclairage sur la plaque pour que celle-ci ait la fonction de sélection de la lumière provenant du point d'éclairage. Lors de l'acquisition de la deuxième image l'anneau entoure le point d'éclairage.

Selon une version de l'invention adaptée au cas ou les deux images sont acquises simultanément : -
- les moyens pour sélectionner la lumière comprennent un masque composé de microprismes transparents ou réfléchissants permettant de renvoyer dans une première direction la lumière provenant des points d'éclairage et constituant un premier faisceau, et de renvoyer dans une seconde direction la lumière provenant de l'ensemble de bandes et constituant un deuxième faisceau.
- le dispositif comprend un moyen pour former la première image à partir du premier faisceau,
- le dispositif comprend un moyen pour former la deuxième image à partir du deuxième faisceau,

Cette version de l'invention est particulièrement adaptée à une imagerie rapide.

Le masque, comme indiqué plus haut, peut être constitué par la superposition d'un premier réseau de disques et d'un second réseau comprenant des disques et des anneaux, les moyens pour modifier les caractéristiques du masque étant constitués par un moyen pour translater le second réseau par rapport au premier réseau, pour que les disques du premier réseau sélectionnent alternativement les anneaux ou les disques du second réseau.

### Description rapide des figures:

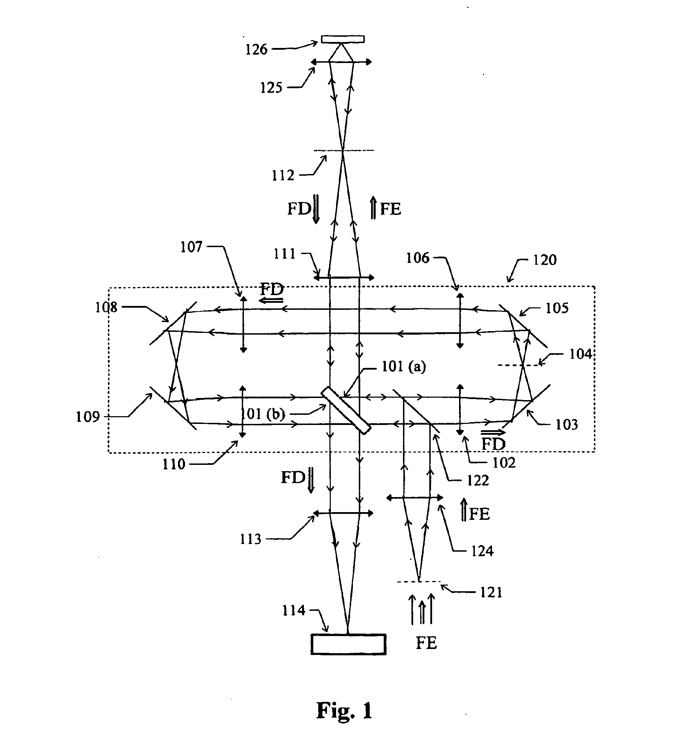

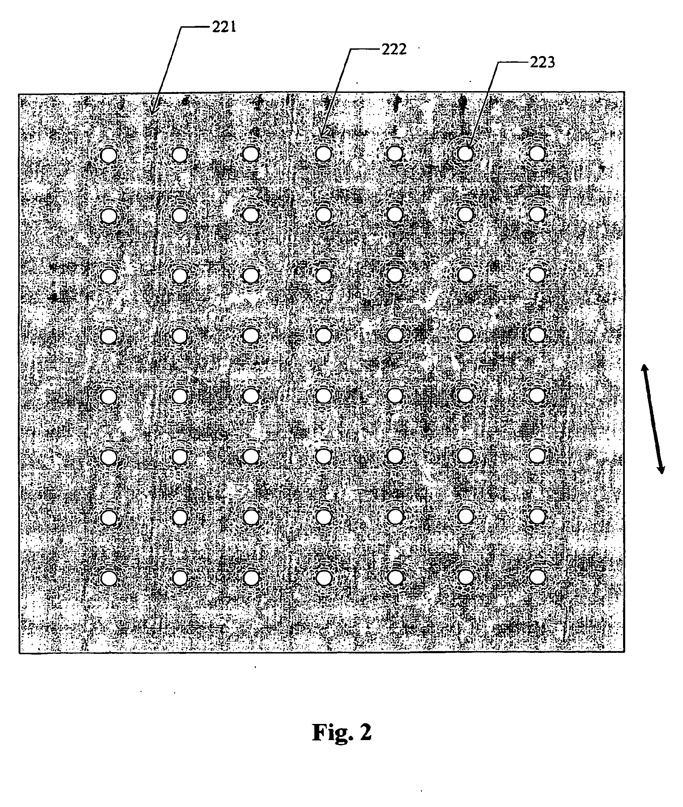

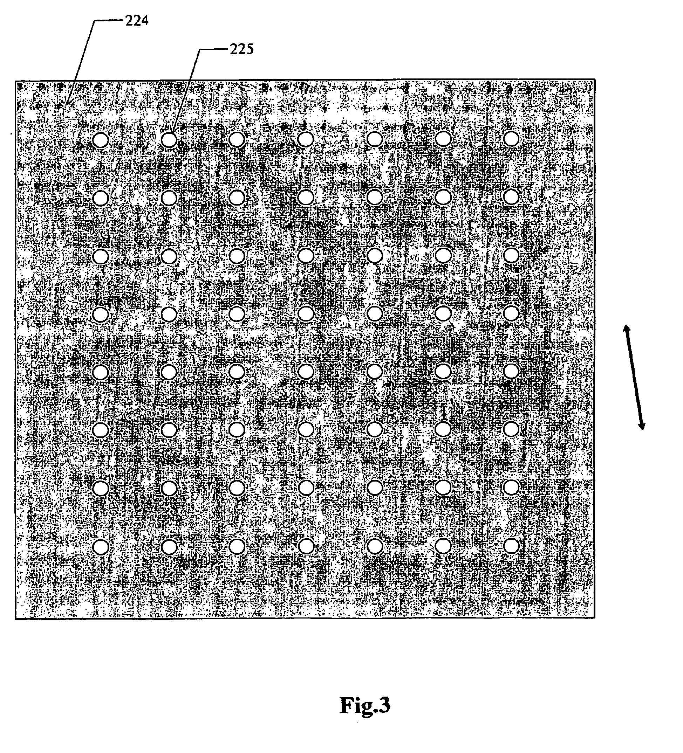

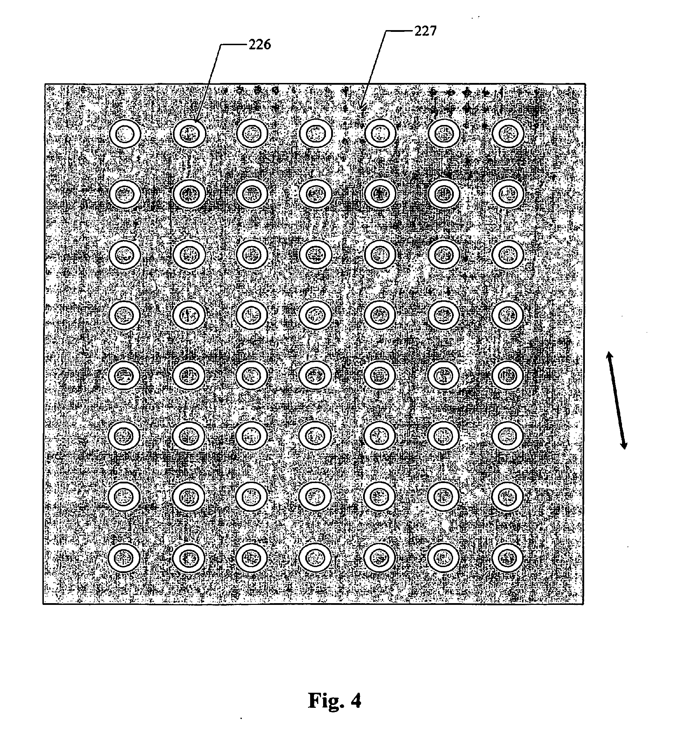

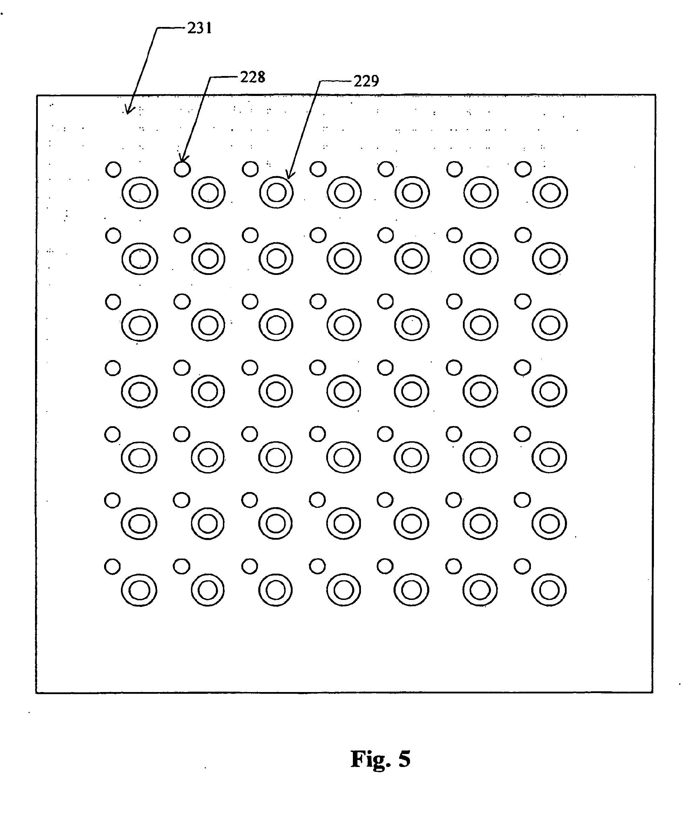

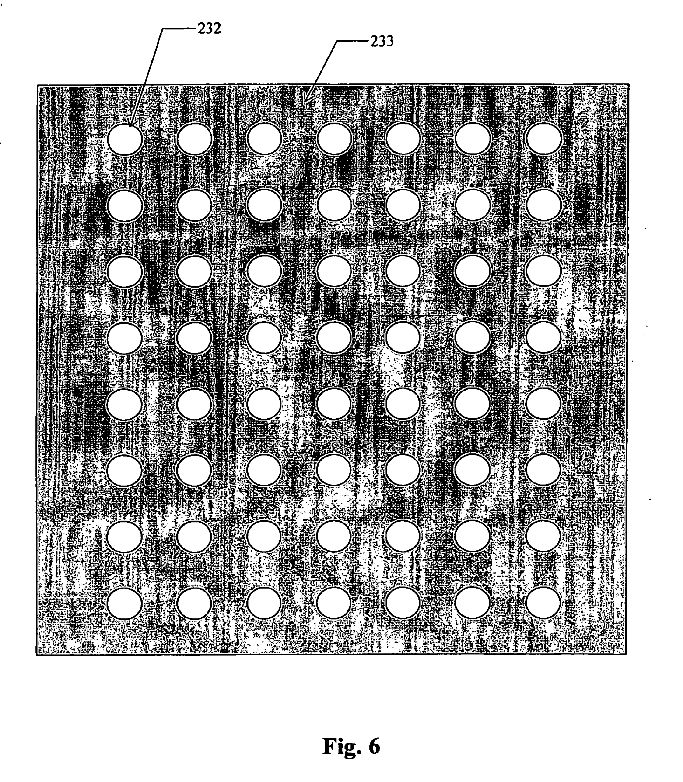

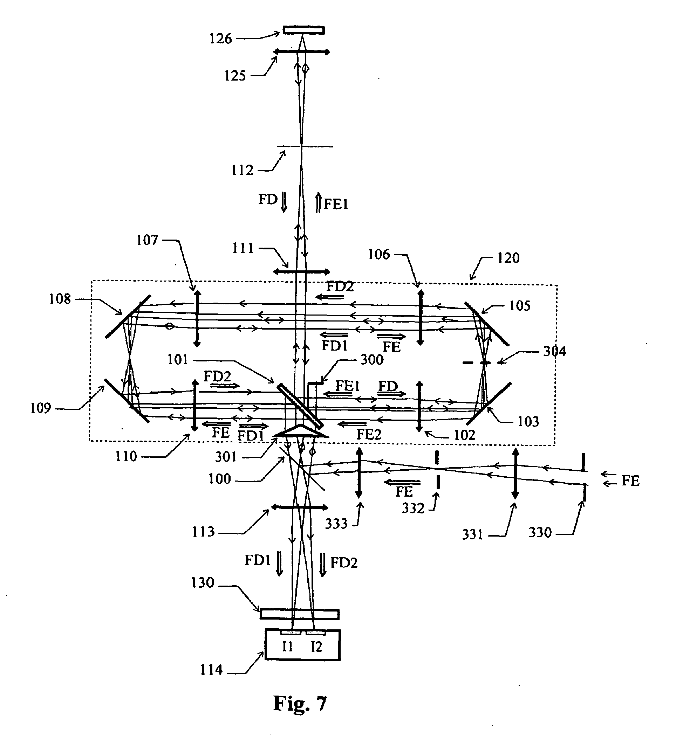

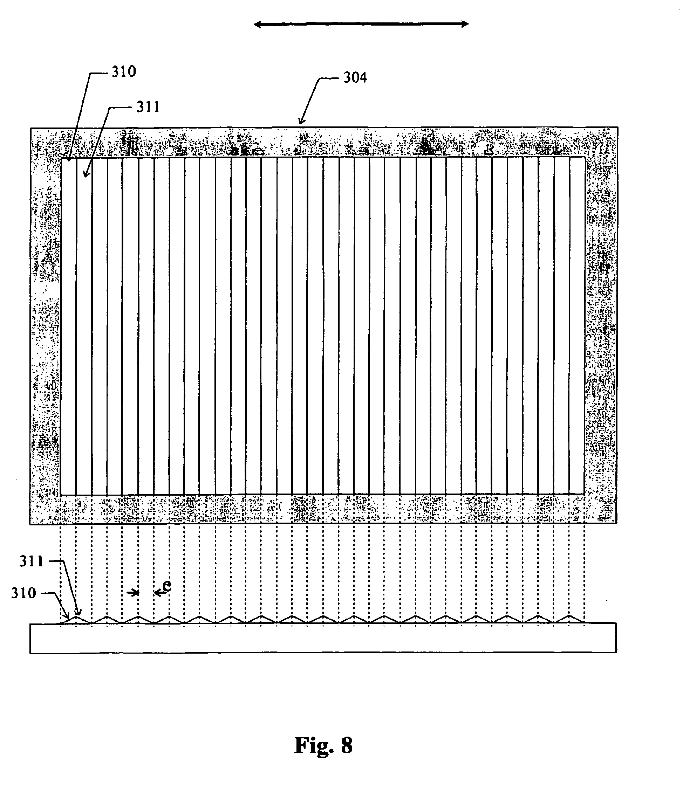

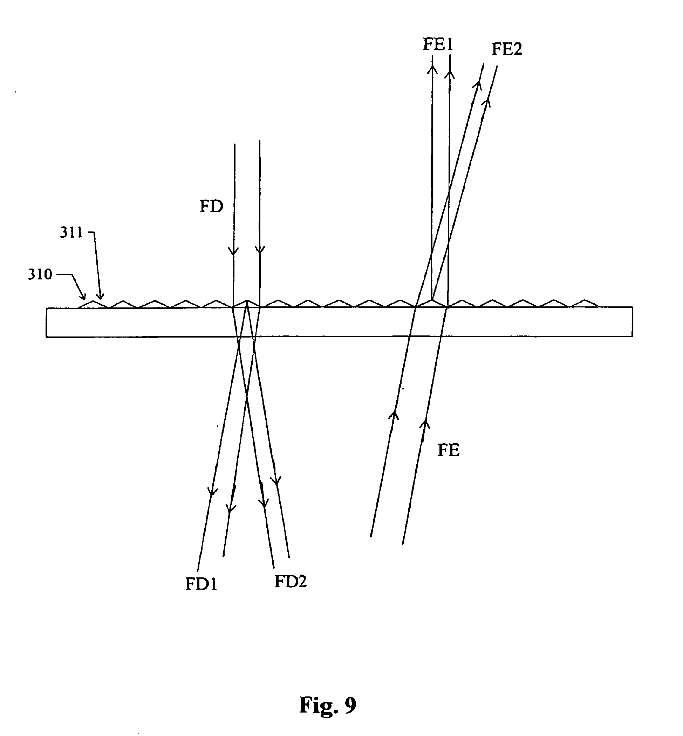

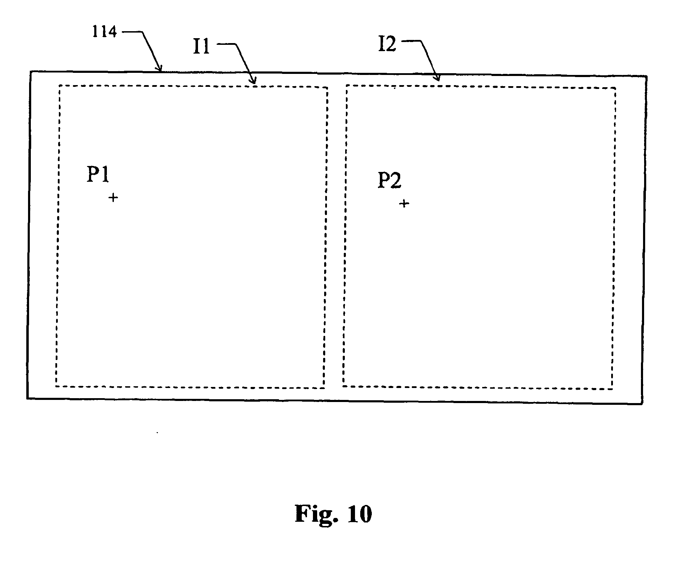

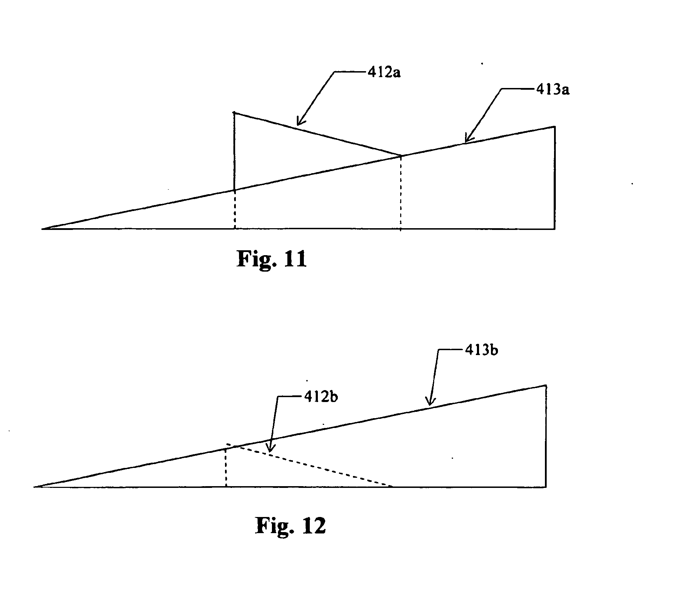

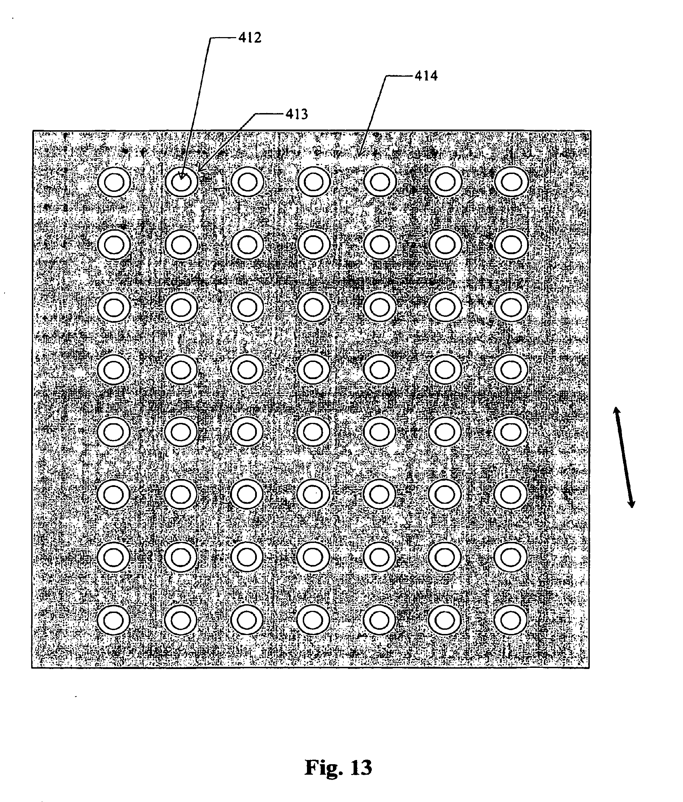

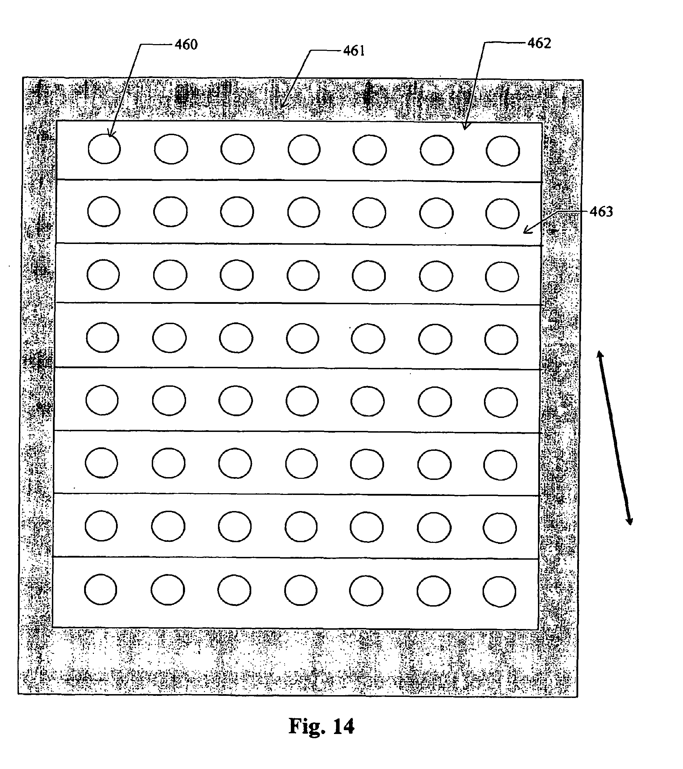

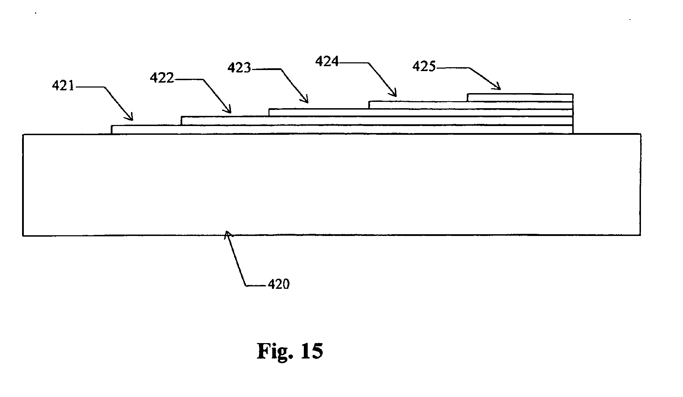

La figure 1 représente le système de balayage utilisé dans un premier mode de réalisation de l'invention. La figure 2 représente la superposition des images géométriques des masques des figures 3 et 4. Les figures 5 et 6 représentent deux plaques litographiées dont la superposition permet d'obtenir les masques des figures 3 et 4. La figure 7 montre un système de balayage modifié pour permettre une acquisition en temps réel dans des conditions de luminosité optimales. La figure 8 montre le masque à microprismes utilisé avec le dispositif de la figure 7. La figure 9 illustre le fonctionnement de ce masque. La figure 10 illustre la formation simultanée de deux images sur le capteur. La figure 11 montre une vue de coté d'une partie filtrante du masque de la figure 13. La figure 12 montre, dans une réalisation différente, une vue de coté de la même partie filtrante. La figure 13 montre un masque à microprismes organisés en disques et anneaux séparés. La figure 14 montre un masque à microprismes organisés en disques inclus dans des bandes. La figure 15 illustre un mode de réalisation des microprismes.

### Premier mode de réalisation:

Ce premier mode de réalisation est représenté sur la figure 1.

Un faisceau d'éclairage FE provenant d'une lampe à arc munie d'un condenseur traverse un masque 121. On a représenté sur la figure la partie du faisceau FE qui est issue d'un point du masque 121. Le faisceau d'éclairage FE traverse ensuite une lentille 124 dont un plan focal est sur le masque 121. Il est ensuite renvoyé par le miroir dichroïque 122 vers le miroir galvanométrique 101 puis vers la lentille 111. Le miroir galvanométrique est dans un plan focal de la lentille 124 et dans un plan focal de la lentille 111. Le faisceau d'éclairage ayant traversé la lentille 111 parvient ensuite à un plan image intermédiaire 112 puis est focalisé par un objectif de microscope 125 sur un plan observé d'un objet observé 126, éclairant une zone d'éclairage qui est donc l'image des parties transparentes du masque 121. Avantageusement, au lieu d'un objectif de microscope 125 à distance finie, on peut utiliser un objectif à distance infinie couplé à une lentille de tube. L'objet observé réémet par fluorescence un faisceau FD à une longueur d'onde différente de la longueur d'onde incidente.

Le faisceau lumineux FD provenant de l'objet observé 126 et collecté par l'objectif 125 traverse le plan image intermédiaire 112 puis la lentille 11 dont un plan focal est le plan 112. On a représenté sur la figure la partie du faisceau FD provenant d'un point particulier de l'objet observé éclairé par la partie du faisceau FE provenant d'un point du masque 121, également représentée. Après traversée de la lentille 111 le faisceau FD est en zone afocale, c'est-à-dire que le faisceau provenant d'un point donné du plan 112 devient parallèle après traversée de la lentille 111. Le faisceau parvient ensuite à l'ensemble de balayage et de compensation 120 dont l'entrée et la sortie sont en zone afocale. Le premier élément rencontré par le faisceau dans le dispositif de balayage est la face objet 101(a) du miroir galvanométrique située dans un plan focal de la lentille 111. Cette face du miroir galvanométrique réfléchit le faisceau vers la lentille 102 dont un plan focal est sur la face 101(a) du miroir galvanométrique. Après traversée de la lentille 102 le faisceau parvient au miroir 103 qui réfléchit le faisceau vers un masque 104 situé dans un plan focal de la lentille 102. Le masque 104 sélectionne la lumière provenant d'une zone de détection qui est l'image des parties transparentes du masque 104. Le faisceau ayant traversé le masque 104 est ensuite réfléchi par le miroir 105 puis traverse la lentille 106 dont un plan focal est sur le réseau 104. Il traverse alors la lentille 107 dont un plan focal est confondu avec un second plan focal de la lentille 106. Il est réfléchi par les miroirs 108 et 109 puis traverse la lentille 110 dont un plan focal est confondu avec le second plan focal de la lentille 107. Il est réfléchi par la face image 101(b) du miroir galvanométrique et sort du dispositif de balayage 120. Il est alors focalisé dans le plan d'un capteur CCD 114 par la lentille 113. Les lentilles 102,106,107,110 sont identiques entre elles. Ce schéma est inspiré du brevet PCT/FR03/00699. Un mode de réalisation équivalent utilise le scanner à 2 lentilles et 4 miroirs décrit dans le brevet PCT/FR03/00699. Ce schéma correspond à un éclairage en fluorescence, avec éclairage de l'objet par une longueur d'onde d'excitation réfléchie par le dichroïque et détection d'une longueur d'onde d'émission traversant le dichroïque. Des résultats améliorés peuvent être obtenus en ajoutant un filtre monochromateur devant le capteur. Le schéma peut être adapté à un éclairage laser multipoints en remplaçant le faisceau d'éclairage FE parvenant au masque 121 par un faisceau laser, et en remplaçant le masque 121 par un réseau de microlentilles situées dans un plan approprié pour générer une pluralité de faisceaux focalisés sur une pluralité de points dans le plan du masque 121. Il peut être adapté de manière similaire à un éclairage monopoint, ce qui nécessite alors un balayage bidirectionnel à l'aide du miroir galvanométrique. Il peut être adapté à un éclairage halogène en réflexion en remplaçant le faisceau d'éclairage FE parvenant au masque 121 par un faisceau issu d'une lampe halogène et en remplaçant le miroir dichroïque 122 par un miroir semitransparent. En déplaçant la lentille 124 ou le masque 121 suivant l'axe optique, on peut corriger des aberrations chromatiques induites par l'objectif de microscope entre la longueur d'onde d'excitation et la longueur d'onde d'émission.

Les masques 121 et 104 peuvent être du type représenté sur les figures 4 et 3. Lors de l'obtention de la première image,ces deux masques sont formé de disques 225 sur fond opaque 224 (figure 3), dont le diamètre peut être proche de celui de la tache d'Airy ou de la demi tache d'Airy selon la précision recherchée, et les zones d'éclairage et de détection, constituées de microdisques, sont exactement superposées. Lors de l'obtention de la deuxième image le masque 121 est inchangé et le masque 104 est formé d'anneaux 226 sur fond opaque 227 (figure 4), la zone d'éclairage et la zone de détection se superposant comme indiqué sur la figure 2. Sur cette figure, la zone claire 223 représente la limite de la zone d'éclairage et les pointillés 222 limitent la zone de détection, en forme d'anneau. L'épaisseur des anneaux peut être par exemple d'un demi diamètre d'Airy. L'image résultante est obtenue comme précédemment. Pour changer de masque entre la première et la deuxième image on utilise par exemple un masque formé de deux vitres litographiées plaçées l'une contre l'autre comme indiqué dans le brevet PCT/FR02/04382. Une des vitres est du type représenté sur la figure 5 et l'autre est du type représenté sur la figure 6. En faisant glisser ces vitres l'une contre l'autre on peut superposer alternativement un trou 228 ou un anneau 229 à un trou 232 et donc alterner entre le masque représenté figure 3 et celui représenté figure4

Lorsque le système est adapté à un éclairage laser, on peut conserver le masque 104 représenté sur les figures 3 et 4. Le masque 121 est simplement remplacé par un réseau de microlentilles qui a un effet équivalent, le plan focal des microlentilles étant dans le plan focal de la lentille 124.

### Deuxième mode de réalisation (mode préféré de réalisation)

Le mode de réalisation précédent présente le défaut de ne pas utiliser de manière optimale l'intensité lumineuse disponible du fait que la première et la deuxième image ne sont pas obtenues simultanément. Le présent mode de réalisation, illustré par la figure 7, résout ce problème. Le faisceau d'éclairage FE est diaphragmé par un diaphragme d'ouverture 330, traverse la lentille 331, est diaphragmé par un diaphragme de champ 332, et traverse la lentille 333 avant de parvenir au dichroïque 100. Après réflexion par le dichroïque 100 il parvient à la moitié droite du prisme 301. Le diaphragme d'ouverture 330, situé dans un plan conjugué à la zone dans laquelle se trouvent le prisme 301 et le miroir galvanométrique, a pour fonction de limiter l'extension du faisceau d'éclairage sur le prisme 301. Le diaphragme de champ 332 limite l'ouverture du faisceau parvenant au prisme 301. Après traversée du prisme 301, le faisceau FE est réfléchi par le miroir galvanométrique 101. Après avoir traversé les lentilles 110, 107, 106 il parvient au masque 304.

Un masque 304 simplifié est représenté sur la figure 8. 11 est composé d'une vitre en verre sur laquelle sont réalisés des microprismes, par exemple 310 et 311. Comme sur les autres dessins la direction de balayage est indiquée par la flèche double épaisse. La figure 9 illustre le fonctionnement de ces microprismes. Le faisceau d'éclairage FE parvenant sur un couple de prismes est divisé en un faisceau FE1 et un faisceau FE2. Le faisceau FE2, après traversée de la lentille 102 puis réflexion par le miroir 103 et la face (a) du miroir galvanométrique 101, est arrêté par le diaphragme d'ouverture 300. Le faisceau FE1, après réflexion par le miroir 103 et la face (a) du miroir galvanométrique 101, traverse la lentille 111 et est dirigé vers le plan intermédiaire 112 puis vers l'objet à observer 126. Par conséquence, l'objet à observer est éclairé par une zone d'éclairage en forme de grille, les microprismes orientés comme 311 générant des bandes claires (zone d'éclairage), et les microprismes orientés comme 310 générant des bandes foncées du fait que le faisceau FE2 provenant de ces microprismes est arrêté par le diaphragme d'ouverture 300. La zone d'éclairage balaye l'objet observé lorsque le miroir galvanométrique se déplace.

Dans l'invention un simple masque en forme de grille n'est pas retenu. Le masque utilisé a une fonctionnalité similaire à celle des masques des figure 2 à 6. Il est illustré par la figure 18. Chaque point de ce masque comprend un microprisme de section circulaire 412 et un microprisme de section annulaire 413. Ces microprismes sont représentés en vue de coté sur les figures 11 (412a et 413a) et sur la figure 12 (412b et 413b) correspondant à des réalisations techniques légèrement différentes. Bien entendu la totalité des microprismes circulaires ont leur pente orientée dans la même direction, qui compte tenu de la configuration employée correspond à la direction de balayage, et la totalité des microprismes annulaires ont leur pente orientée dans la même direction mais en sens inverse.

Le faisceau FD revenant de l'objet observé parvient à nouveau au masque 304. Comme indiqué sur la figure 19, le faisceau FD provenant de l'objet observé est divisé par les microprismes en un premier faisceau FD1 et un deuxième faisceau FD2 différant entre eux par leur orientation. Ces deux faisceaux reviennent ensuite à la face (b) du miroir galvanométrique 101 après avoir passé les lentilles 106, 107,110. A proximité de la face (b) du miroir galvanométrique 101 les deux faisceaux sont séparés spatialement. Chacun des deux faisceau traverse un demi-prisme différent (les deux moitiés du prisme 301) qui en modifie l'orientation. Après traversée de la lentille 113 les deux faisceaux parviennent en des points différents du capteur 114. Il se forme dans le plan du capteur CCD 114 deux images 11 et 12 dont l'extension est représentée sur la figure 10. La taille de ces images est déterminée par le diaphragme de champ 332 qui doit donc de préférence être rectangulaire. La première image (11) est obtenue à partir du premier faisceau, qui a a retraversé les microprismes orientés comme 412, déjà traversés par le faisceau d'éclairage. Elle est donc obtenue à partir d'une zone de détection coïncidant avec la zone d'éclairage. La deuxième image (12) est obtenue à partir du deuxième faisceau. Ce deuxième faisceau a retraversé les microprismes orientés comme 413, qui associés au diaphragme 300 avaient arrêté le faisceau d'éclairage. Elle est donc obtenue à partir d'une zone de détection complémentaire de la zone d'éclairage. Chaque point de l'objet observé a deux points image, par exemple P1 et P2, dont l'un se trouve sur la première image 11 et l'autre se trouve sur la seconde image 12. Le vecteur P1P2 ne dépend pas du point de l'objet observé. Une image résultante est formée en calculant pour chaque point de l'objet observé la différence entre les valeurs acquises sur le capteur pour ses deux points image P1 et P2 après que le miroir galvanométrique ait réalisé un balayage de l'image du masque sur l'objet observé. Avant calcul de la différence il est possible de multiplier chaque image par un coefficient multiplicatif ayant pour fonction d'ajuster au mieux le résultat pour obtenir la meilleure image possible.

Toutefois, en particulier lorsque la zone d'éclairage est constituée par un ensemble de disques rapprochés, il est préférable que la zone de détection pour l'obtention de la deuxième image soit la complémentaire de la zone de détection pour l'obtention de la première image. La figure 114 illustre le masque correspondant. 11 comprend, sur un cadre absorbant 461, des microprismes circulaires, par exemple 460, ayant tous une pente dans la même direction et le même sens, et des microprismes en forme de bandes 462 ou 463 interrompus par les microprismes circulaires et ayant tous une pente dans le sens opposé à celle des microdisques circulaires. Notons que si les microprismes en formes de bandes ont une pente orientée perpendiculairement à la direction des bandes, et donc dans le cas représenté sur la figure, en biais par rapport à la direction de balayage, alors il est préférable de faire légèrement tourner le prisme 301 et le capteur 114 autour de l'axe optique, pour que le prisme 301 sépare deux zones qui ne sont plus symétriques par rapport à un plan orthogonal à la figure, mais par rapport à un plan qui est également en biais.

Les microprismes peuvent être réalisés par des techniques d'usinage au diamant suivi de moulage. Les microprismes peuvent également être réalisés par litographie dans la mesure ou leur pente est faible et ou leur largeur est raisonnable. Ils sont alors approximés par une succession de couches de diélectrique comme indiqué sur la figure 15. Un microprisme est réalisé sur un substrat 420 par dépôt de plusieurs couches 421 à 425 par litographie. On peut aussi réaliser un moule par litographie à l'aide de couches métalliques puis mouler le réseau de microprismes dans un polymère.

Ce mode de réalisation est particulièrement avantageux car il permet d'obtenir en temps réel des images dans des conditions optimales d'utilisation de l'information.

Bien qu'il ait été illustré dans une configuration ou le masque à microprismes est traversé à la fois par le faisceau d'éclairage et par le faisceau provenant de l'objet observé, ce mode de réalisation peut également être adapté à une configuration proche du premier mode de réalisation, dans laquelle le faisceau d'éclairage ne traverse pas le masque à microprismes, étant déjà filtré par un masque classique disposé sur la ligne d'éclairage. Dans ce cas, le faisceau d'éclairage FE est unique (il n'est donc pas nécessaire de prévoir un diaphragme 300) et est traité comme sur la figure 1. Le faisceau revenant de l'objet parvient au masque à microprismes et est donc traité comme sur la figure 7. L'avantage d'une configuration proche du premier mode de réalisation est que la différence d'aberration chromatique entre une longueur d'onde d'excitation de la fluorescence et une longueur d'onde de détection de la fluorescence peut être compensée par un déplacement suivant l'axe optique du masque disposé sur la ligne d'éclairage ou de la lentille 124 représentée figure 1.

### Variantes du dispositif de balayage.

Le système peut également être utilisé avec d'autres dispositifs de balayage.

Par exemple il est possible de réaliser le masque à microprismes sur un disque de Nipkow. Sur la figure 7, il suffit de remplacer le masque fixe par un masque monté sur un disque tournant, et de remplacer le miroir galvanométrique par un miroir fixe, pour obtenir un système fonctionnel. Toutefois les caractéristiques de balayage (trajectoire circulaire) tendent à dégrader l'image. Le système peut être « déplié » puisque le miroir galvanométrique est inutile, mais il reste nécessaire de générer des plans appropriés pour les différents diaphragmes et masques, et le système n'est donc pas notablement simplifié.

Au lieu d'un disque de Nipkow, on peut déplacer les microprismes à l'aide d'un dispositif permettant une translation (moteur pas à pas par exemple). Cette solution évite les problèmes liés à la trajectoire circulaire. Le déplacement peut être très court (au minimum, la largeur d'un microprisme soit quelques dizaines de microns) ce qui permet un balayage rapide. Le dispositif de translation peut également générer un déplacement de type oscillatoire des microprismes si ceux-ci sont montés à l'aide de ressorts de caractéristiques appropriées.

Le système peut également être utilisé avec des dispositifs de balayage du type décrit dans le brevet PCT/FR01/02890, par exemple sur la figure 22 de ce brevet, et qui impliquent que le masque fonctionne en réflexion. Dans ce cas les bandes, disque ou anneaux des masques sont réalisés par dépôt d'une couche réfléchissante sur un fond transparent pour les deux premiers modes de réalisation, ou par réalisation de prismes recouverts d'une couche réfléchissante, pour le troisième mode de réalisation. Dans le cas d'une réalisation des prismes par litographie, cette solution simplifie la réalisation car les dépôts peuvent tous être métalliques (les prismes réfléchissent la lumière au lieu de la transmettre). D'une manière générale les microprismes peuvent donc être aussi bien des prismes fonctionnant en réflexion que des prismes fonctionnant en transmission. Dans le cas ou les images sont obtenues successivement, il est difficile d'utiliser un disque de Nipkow car celui-ci ne permet pas d'avoir une zone de détection distincte de la zone d'éclairage, à moins toutefois de l'équiper d'un réseau de trous fait de deux plaques superposées et permettant d'alterner par exemple des trous en forme de disque et des trous en forme d'anneaux. Du fait que le disque tourne en permanence, ceci est difficile.

### Techniques pour déterminer le coefficient multiplicateur

D'une manière générale la combinaison de la première image et de la deuxième image se fait par soustraction de ces deux images affectées d'un coefficient multiplicatif. En fait il n'y a qu'un seul coefficient à déterminer si on fait abstraction du niveau général de luminosité de l'image. La superposition de deux images 11[i,j] et 12[i,j], ou i et j sont les coordonnées entières d'un point du capteur dans le plan, se calcule alors comme IR[i,j]=C1*(11[i,j]-C2*12[i,j]-C3)
Avec C3=Min(11[i,j]-C2*12[i,j])
Et C1=256/Max(11[i,j]-C2*12[i,j]-C3)
Dans le cas par exemple d'un affichage sur 256 niveaux de gris, le symbole * représentant la multiplication. On peut écrire un programme affichant l'image résultante IR[i,j] en fonction du coefficient multiplicateur C2 et comportant une barre d'ajustement permettant de faire varier progressivement ce coefficient entre deux valeurs extrêmes. En faisant varier C2 et en observant l'image résultante, on arrive assez bien à déterminer la valeur de C2 qui génère l'image résultante la plus nette et la plus contrastée, dans laquelle les éléments hors plan de focalisation sont le mieux éliminés. Une fois que ce coefficient C2 est déterminé pour un système d'imagerie donné, il reste normalement indépendant de l'échantillon observé.

On peut également déterminer le coefficient C2 par un calcul numérique visant à minimiser l'entropie de la résultante IR[i,j]. Par exemple on calcule l'entropie de IR[i,j] pour un ensemble de valeurs de C2 et on choisit la valeur correspondant au minimum d'entropie. L'entropie se calcule comme la somme sur l'ensemble des indices i,j de -IR[i,j]*log(IR[i,j]/256).

### Choix des zones d'éclairage et de détection :

On peut acquérir une première image, dite « pseudo-confocale » 11[i,j], pour laquelle la zone d'éclairage et la zone de détection sont confondues. On peut acquérir une deuxième image dite « complémentaire » 12[i,j] pour laquelle la zone de détection est la complémentaire de la zone d'éclairage elle-même inchangée. L'image « non confocale » vaut alors IN[i,j]= 11[i,j] + 12[i,j]. L'image 11[i,j] peut s'écrire 11[i,j]=K1*IN[i,j]+K2*IC[i,j] ou IC[i,j] est une image confocale « pure » c'est-à-dire dont la luminosité n'augmente pas quand l'épaisseur de la zone fluorescente augmente. K1 et K2 sont des constantes dépendant de la configuration exacte des zones d'éclairage et de détection pour l'acquisition des deux images. On peut donc écrire IC[i,j] = 1/K2*11[i,j] - K1/K2*IN[i,j] ou IC[i,j] = (1-K1)/K2*11[i,j] - K1/K2*12[i,j]. La seconde formule donne l'image confocale en fonction de l'image complémentaire et de l'image pseudo-confocale. Si on acquiert l'image pseudo-confocale et l'image non confocale pour calculer l'image confocale, on perd en rapport signal sur bruit. Si on utilise des zones non complémentaires on soustrait une image partiellement confocale ce qui peut permettre une élimination plus complète des basses fréquences, mais ce n'est pas en général l'effet recherché et il est donc préférable d'utiliser des zones complémentaires.

### Applications industrielles:

Le présent dispositif d'imagerie peut être utilisé en microscopie pour l'imagerie d'échantillons biologiques ou de matériaux.

## Revendications

1. Dispositif d'imagerie confocale ou semi-confocale comprenant:
a) un moyen pour éclairer au moins un point d'éclairage sur une zone observée d'un plan observé (126) à l'aide d'un faisceau lumineux (FE) d'éclairage,
b) un moyen pour sélectionner spatialement, dans la lumière provenant du plan observé, la lumière provenant dudit point d'éclairage,
c) un moyen pour former une image dudit point d'éclairage à partir de la lumière sélectionnée provenant dudit point d'éclairage,
d) un système de balayage (120) pour déplacer ledit point d'éclairage sur la zone observée et pour déplacer simultanément l'image dudit point d'éclairage, pour balayer une zone observée et former une première image de la zone observée,
e) un capteur (114) détectant la première image,
**caractérisé par** les faits suivants :
f) il comprend un moyen pour sélectionner, dans la lumière provenant du plan observé, la lumière provenant d'une bande entourant ledit point d'éclairage,
g) il comprend un moyen pour former une image de ladite bande à partir de la lumière sélectionnée provenant de ladite bande,
h) le système de balayage est disposé pour déplacer simultanément ledit point d'éclairage et l'image de ladite bande, pour former une deuxième image de la zone observée à partir de la lumière sélectionnée provenant de ladite bande,
i) il comprend un capteur détectant la deuxième image,
j) il comprend un moyen pour combiner les première et deuxième images de la zone observée en une troisième image de la zone observée.

2. Dispositif selon la revendication 1, **caractérisé par le fait que** lesdits moyens pour combiner lesdites première et seconde images déterminent la différence entre la première image affectée d'un premier coefficient multiplicateur, et la seconde image affectée d'un second coefficient multiplicateur.

3. Dispositif selon une des revendications 1 à 2, **caractérisé par le fait que** ladite bande est un anneau concentrique audit point d'éclairage.

4. Dispositifselon une des revendications 1 à 3, **caractérisé par le fait qu'**il comprend une pluralité de points d'éclairage et une pluralité de bandes, chacune desdites bandes entourant un point d'éclairage correspondant.

5. Dispositif selon une la revendication 4, **caractérisé par le fait que** le moyen pour éclairer la pluralité de points d'éclairage comprennent un réseau de microlentilles séparant un faisceau laser en une pluralité de sous-faisceaux focalisés chacun sur un point d'éclairage.

6. dispositif selon une des revendications 1 à 3, **caractérisé par le fait qu'**il comprend un seul point d'éclairage, et **par le fait que** le moyen pour éclairer le point d'éclairage comprend une lentille focalisant un faisceau laser sur le point d'éclairage.

7. Dispositif selon une des revendications 1 à 6, **caractérisé par le fait que** les moyens pour sélectionner la lumière sont constitués par la superposition d'une première plaque opaque comprenant au moins un disque transparent, et d'une seconde plaque opaque comprenant au moins un disque transparent et au moins un anneau transparent, ainsi que par un moyen pour translater la seconde plaque par rapport à la première, pour amener le disque de la seconde plaque en regard du disque de la première plaque lors de l'acquisition de la première image, et pour amener ensuite l'anneau de la seconde plaque en regard du disque de la première plaque lors de l'acquisition de la seconde image.

8. Dispositif une des revendications 4 à 5, **caractérisé par** les faits suivants :
- les moyens pour sélectionner la lumière comprennent un masque composé de microprismes transparents ou réfléchissants permettant de renvoyer dans une première direction la lumière provenant des points d'éclairage et constituant un premier faisceau, et de renvoyer dans une seconde direction la lumière provenant des bandes et constituant un deuxième faisceau.
- le dispositif comprend un moyen pour former la première image à partir du premier faisceau,
- le dispositif comprend un moyen pour former la deuxième image à partir du deuxième faisceau.

9. Dispositif selon la revendication 8, **caractérisé par le fait qu'**il comprend :
- une lentille intermédiaire pour renvoyer le premier et le deuxième faisceau dans une zone de séparation ou ils sont spatialement disjoints,
- au moins un prisme ou un miroir placé dans la zone de séparation, pour modifier la direction d'au moins un des premiers et deuxième faisceaux.

10. Dispositif selon la revendication 9, **caractérisé par le fait qu'**il comprend une lentille traversée simultanément par le premier et le deuxième faisceau après la zone de séparation, et formant la première et la seconde image dans deux zones distinctes d'un même plan image.

11. Dispositif une des revendications 8 à 9, **caractérisé par** les faits suivants :
- il comprend un premier diaphragme d'ouverture traversé par le faisceau lumineux d'éclairage avant qu'il ne parvienne au masque composé de microprismes transparents ou réfléchissants,
- il comprend un second diaphragme d'ouverture traversé par le faisceau lumineux d'éclairage provenant du masque et dirigé vers l'objet observé,
- le premier diaphragme d'ouverture est positionné de manière à ce que la partie du faisceau d'éclairage qui parvient à une zone du masque qui transmet ledit deuxième faisceau soit ensuite arrêtée par le second diaphragme d'ouverture, et de manière à ce que la partie du faisceau d'éclairage qui parvient à une zone du masque qui transmet ledit premier faisceau traverse ensuite le second diaphragme d'ouverture.

12. Dispositif suivant une des revendications 1 à 11, **caractérisé par le fait que** les moyens de sélection sont des masques fixes et **par le fait que** le système de balayage est constitué par un miroir mobile.

## Claims

1. A confocal or semi-confocal imaging device comprising:
a) a means for illuminating at least one illumination point on an observed zone of an observed plane (126) by means of an illumination light beam (FE),
b) a means for spatially selecting, in the light coming from the observed plane, the light coming from said illumination point,
c) a means for forming an image of said illumination point from the selected light coming from said illumination point,
d) a scanning system (120) for displacing said illumination point on the observed zone and for simultaneously displacing the image of said illumination point, in order to scan an observed zone and form a first image of the observed zone,
e) a sensor (114) which detects the first image,
**characterized in that**:
f) it comprises a means for selecting, in the light coming from the observed plane, the light coming from a band surrounding said illumination point,
g) it comprises a means for forming an image of said band from the selected light coming from said band,
h) the scanning system is arranged so as to simultaneously displace said illumination point and the image of said band, in order to form a second image of the observed zone from the selected light coming from said band,
i) it comprises a sensor which detects the second image,
j) it comprises a means for combining the first and second images of the observed zone to form a third image of the observed zone.

2. The device as claimed in claim 1, **characterized in that** said means for combining said first and second images determine the difference between the first image modified by a first multiplier coefficient and the second image modified by a second multiplier coefficient.

3. The device as claimed in one of claims 1 to 2, **characterized in that** said band is a ring that is concentric to said illumination point.

4. The device as claimed in one of claims 1 to 3, **characterized in that** it comprises a plurality of illumination points and a plurality of bands, each of said bands surrounding a corresponding illumination point.

5. The device as claimed in claim 4, **characterized in that** the means for illuminating the plurality of illumination points comprise an array of microlenses which separate a laser beam into a plurality of subbeams, each focused on one illumination point.

6. The device as claimed in one of claims 1 to 3, **characterized in that** it comprises a single illumination point, and **in that** the means for illuminating the illumination point comprises a lens which focuses a laser beam on the illumination point.

7. The device as claimed in one of claims 1 to 6, **characterized in that** the means for selecting the light consist of the superposition of a first opaque plate comprising at least one transparent disk and of a second opaque plate comprising at least one transparent disk and at least one transparent ring, as well as a means for moving the second plate in translation with respect to the first, so as to bring the disk of the second plate opposite the disk of the first plate during acquisition of the first image and so as to then bring the ring of the second plate opposite the disk of the first plate during acquisition of the second image.

8. The device as claimed in one of claims 4 to 5, **characterized in that**:
- the means for selecting the light comprise a mask composed of transparent or reflective microprisms which make it possible to send in a first direction the light coming from the illumination points and constituting a first beam and to send in a second direction the light coming from the bands and constituting a second beam,
- the device comprises a means for forming the first image from the first beam,
- the device comprises a means for forming the second image from the second beam.

9. The device as claimed in claim 8, **characterized in that** it comprises:
- an intermediate lens for sending the first and the second beam into a separation zone where they are spatially separated,
- at least one prism or one mirror which is placed in the separation zone, in order to modify the direction of at least one of the first and second beams.

10. The device as claimed in claim 9, **characterized in that** it comprises a lens which is simultaneously passed through by the first and the second beam after the separation zone, and which forms the first and the second image in two distinct zones of the same image plane.

11. The device as claimed in one of claims 8 to 9, **characterized in that**:
- it comprises a first aperture diaphragm which is passed through by the illumination light beam before it reaches the mask composed of transparent or reflective microprisms,
- it comprises a second aperture diaphragm which is passed through by the illumination light beam coming from the mask and directed toward the observed object,
- the first aperture diaphragm is positioned such that the part of the illumination beam which reaches a zone of the mask which transmits said second beam is then stopped by the second aperture diaphragm, and such that the part of the illumination beam which reaches a zone of the mask which transmits said first beam then passes through the second aperture diaphragm.

12. The device as claimed in one of claims 1 to 11, **characterized in that** the selection means are fixed masks and **in that** the scanning system consists of a moveable mirror.

## Patentansprüche

1. Konfokale oder semi-konfokale Abbildungsvorrichtung, welche umfasst:
a) ein Mittel zur Beleuchtung mindestens eines Beleuchtungspunkts in einem beobachteten Bereich einer beobachteten Ebene (126) mit Hilfe eines Beleuchtungsstrahlenbündels (FE),
b) ein Mittel zur räumlichen Selektion des von dem genannten Beleuchtungspunkt kommenden Lichts in dem von der beobachteten Ebene kommenden Licht,
c) ein Mittel zur Erzeugung eines Bildes des genannten Beleuchtungspunkts aus dem selektierten Licht, das von dem genannten Beleuchtungspunkt kommt,
d) ein Scansystem (120) zur Verschiebung des genannten Beleuchtungspunkts in den beobachteten Bereich und zur gleichzeitigen Verschiebung des Bildes des genannten Beleuchtungspunkts, um einen beobachteten Bereich zu scannen und ein erstes Bild des beobachteten Bereichs zu erzeugen,
e) ein Sensor (114), der das erste Bild abtastet,
**dadurch gekennzeichnet, dass**:
f) sie ein Mittel umfasst, um in dem von der beobachteten Ebene kommenden Licht dasjenige Licht zu selektieren, welches von einem den genannten Beleuchtungspunkt umgebenden Streifen kommt,
g) sie ein Mittel umfasst, um aus selektierten Licht, das von dem genannten Streifen kommt, ein Bild des genannten Streifens zu erzeugen,
h) das Scansystem so angeordnet ist, dass gleichzeitig der genannte Beleuchtungspunkt und das Bild des genannten Streifens verschoben werden, um aus dem selektierten Licht, das von dem genannten Streifen kommt, ein zweites Bild des beobachteten Bereichs zu erzeugen,
i) sie einen Sensor umfasst, der das zweite Bild abtastet,
j) sie ein Mittel zur Kombination des ersten und zweiten Bildes des beobachteten Bereichs in einem dritten Bild des beobachteten Bereichs umfasst,

2. Vorrichtung gemäß dem Patentanspruch 1, **dadurch gekennzeichnet, dass** die genannten Mittel zur Kombination des genannten ersten und des genannten zweiten Bildes den Unterschied zwischen dem ersten, mit einem ersten Faktor multiplizierten Bild und dem zweiten, mit einem zweiten Faktor multiplizierten Bild bestimmen.

3. Vorrichtung gemäß einem der Patentansprüche 1 bis 2, **dadurch gekennzeichnet, dass** es sich bei dem genannten Streifen um einen konzentrisch zum Beleuchtungspunkt verlaufenden Ring handelt.

4. Vorrichtung gemäß einem der Patentansprüche 1 bis 3, **dadurch gekennzeichnet, dass** sie eine Vielzahl von Beleuchtungspunkten und eine Vielzahl von Streifen umfasst, wobei jeder der genannten Streifen einen entsprechenden Beleuchtungspunkt umgibt.

5. Vorrichtung gemäß dem Patentanspruch 4, **dadurch gekennzeichnet, dass** das Mittel zur Beleuchtung der Vielzahl der Beleuchtungspunkte ein Mikrolinsenraster umfasst, welches ein Laser-Strahlenbündel in eine Vielzahl von jeweils auf einen Beleuchtungspunkt fokussierten Unter-Strahlenbündeln auftrennt.

6. Vorrichtung gemäß einem der Patentansprüche 1 bis 3, **dadurch gekennzeichnet, dass** sie einen einzigen Beleuchtungspunkt umfasst, und **dadurch**, dass das Mittel zur Beleuchtung des Beleuchtungspunkts eine Linse umfasst, die ein Laser-Strahlenbündel auf den Beleuchtungspunkt fokussiert.

7. Vorrichtung gemäß einem der Patentansprüche 1 bis 6, **dadurch gekennzeichnet, dass** die Mittel zur Selektion des Lichts aus der Überlagerung einer ersten lichtundurchlässigen Platte, die mindestens eine transparente Scheibe umfasst, und einer zweiten lichtundurchlässigen Platte, die mindestens eine transparente Scheibe und mindestens einen transparenten Ring umfasst, sowie aus einem Mittel zur translatorischen Bewegung der zweiten Platte gegenüber der ersten bestehen, um bei der Erfassung des ersten Bildes die Scheibe der zweiten Platte in eine der Scheibe der ersten Platte gegenüberliegende Position zu bringen, und um anschließend bei der Erfassung des zweiten Bildes den Ring der zweiten Platte in eine der Scheibe der ersten Platte gegenüberliegende Position zu bringen.

8. Vorrichtung gemäß einem der Patentansprüche 4 bis 5, **dadurch gekennzeichnet, dass**:
- die Mittel zur Selektion des Lichts eine Maske umfassen, die aus transparenten oder reflektierenden Mikroprismen besteht, wodurch das Licht, das von den Beleuchtungspunkten kommt und ein erstes Strahlenbündel bildet, in eine erste Richtung umgelenkt werden kann, und das Licht, das von den Streifen kommt und ein zweites Strahlenbündel bildet, in eine zweite Richtung umgelenkt werden kann.
- die Vorrichtung ein Mittel umfasst, um aus dem ersten Strahlenbündel das erste Bild zu erzeugen,
- die Vorrichtung ein Mittel umfasst, um aus dem zweiten Strahlenbündel das zweite Bild zu erzeugen.

9. Vorrichtung gemäß dem Patentanspruch 8, **dadurch gekennzeichnet, dass** sie umfasst:
- eine Zwischenlinse zur Umlenkung des ersten und des zweiten Strahlenbündels in einen Auftrennungsbereich, wo sie räumlich aufgetrennt werden,
- mindestens ein Prisma oder einen Spiegel, das/der in dem Auftrennungsbereich angeordnet ist, um die Richtung mindestens eines der zwei Strahlenbündel zu ändern.

10. Vorrichtung gemäß dem Patentanspruch 9, **dadurch gekennzeichnet, dass** sie eine Linse umfasst, die nach dem Auftrennungsbereich gleichzeitig von dem ersten und dem zweiten Strahlenbündel durchlaufen wird, und das erste und das zweite Bild in zwei unterschiedlichen Bereichen ein und derselben Bildebene erzeugt.

11. Vorrichtung gemäß einem der Patentansprüche 8 bis 9, **dadurch gekennzeichnet, dass**:
- sie eine erste Öffnungsblende umfasst, die von dem Beleuchtungsstrahlenbündel durchlaufen wird, bevor es an der aus transparenten oder reflektierenden Mikroprismen bestehenden Maske ankommt,
- sie eine zweite Öffnungsblende umfasst, die von dem Beleuchtungsstrahlenbündel durchlaufen wird, das von der Maske kommt und zu dem beobachteten Objekt gelenkt wird,
- die erste Öffnungsblende so positioniert ist, dass der Teil des Beleuchtungsstrahlenbündels, der in einen Bereich der Maske gelangt, der das genannte zweite Strahlenbündel weiterleitet, anschließend durch die zweite Öffnungsblende aufgehalten wird, und so, dass der Teil des Beleuchtungsstrahlenbündels, der in einen Bereich der Maske gelangt, der das genannte erste Strahlenbündel weiterleitet, anschließend die zweite Öffnungsblende durchläuft.

12. Vorrichtung gemäß einem der Patentansprüche 1 bis 11, **dadurch gekennzeichnet, dass** es sich bei den Mitteln zur Auftrennung um feste Masken handelt, und **dadurch**, dass das Scansystem durch einen beweglichen Spiegel gebildet wird.
